# EUROPEAN PATENT SPECIFICATION

(11) **EP 2 966 130 B1**
(45) Date of publication and mention of the grant of the patent: **29.11.2017**
(21) Application number: 14380020.9
(22) Date of filing: 09.07.2014
(51) Int. Cl.: C09D 5/00

(54) **Surface treatment of asphalt road pavements with a photocatalytic composition for the abatement of atmospheric pollutant**
Oberflächenbehandlung von Asphaltstraßenbelägen mit photokatalytischer Zusammensetzung zur Minderung von atmosphärischen Schadstoffen
Traitement de surface de revêtement de chaussées en asphalte avec une composition photocatalytique pour la réduction de polluants atmosphériques

(43) Date of publication of application: 13.01.2016
(73) Proprietor: Sacyr Construcción, S.A., 28046 Madrid (ES); Servià Cantó, S.A., 08007 Barcelona (ES); Repsol, S.A., 28045 Madrid (ES); Asfaltos y Construcciones Elsan S.A., 28046 Madrid (ES); Fundación CARTIF, 47151 Boecillo Valladolid (ES)
(72) Inventor: Fermoso Dominguez, José, 47008 Valladolid (ES); Gomez Rincon, Marta, 47420 Iscar (Valladolid) (ES); Antolin Giraldo, Gregorio, 47007 Valladolid (ES); Carrera Paez, Virginia, 28935 Mostoles (Madrid) (ES); Pérez Lepe, Antonio, 28935 Mostoles (Madrid) (ES); Barcelo Martinez, Francisco José, 28935 Mostoles (Madrid) (ES); Costa Hernandez, Andrés, 28020 Madrid (ES); Loma Lozano, Javier, 28020 Madrid (ES); Cortés de la Fuente, Christian, 08007 Barcelona (ES); Diaz Martin, Patricia, 28046 Madrid (ES); Ramirez Rodriguez, Antonio Angel, 28046 Madrid (ES)
(74) Representative: Lehmann Novo, Maria Isabel

(56) References cited:
- EP-A1- 2 014 726
- WO-A1-2005/083013
- CN-A- 101 724 324
- CN-A- 102 051 098
- JP-A- H10 251 565
- JP-A- H11 100 543

## Description

### TECHNOLOGICAL SECTOR

This invention relates to the technical field of atmospheric pollution abatement technologies, and more specifically to surface treatments applicable to bituminous road pavements using a coating film, comprising a photocatalytic composition.

### STATE OF THE ART

Atmospheric pollution in large cities is a global problem that is being approached from numerous fronts: improvements to vehicles, promotion of public transport, restrictions to the use of private vehicles in city centres, less polluting fuel, and so forth. Moreover, the last decade has seen significant advances in the development of technologies capable of removing some of the most harmful chemical components causing atmospheric pollution. One of the most important of these technologies is the use of materials with a photocatalytic composition, which can eliminate nitrogen oxides and volatile organic compounds.

There are a large number of photocatalytic materials on the market capable of being activated by ultraviolet radiation (UV), visible radiation or both. Manufacturers, such as Millenium, Degussa and Cronos, have developed photocatalysts with specific characteristics by virtue of which high rates of pollution abatement are obtained, particularly in respect of nitrogen oxides.

An essential requirement for a photocatalyst to have activity is that there is physical contact between the surface of the photocatalyst and the polluting substance to be removed. This contact in conjunction with the energy provided by radiation (normally, ultraviolet and/or visible radiation) enable all of the chemical reactions generated by this process of pollution abatement to take place. Consequently, the surface on which the photocatalyst is applied is essential for the pollution abatement process to function correctly.

From a viewpoint of effectiveness, the use of photocatalytic materials on asphalt road paving has several very important advantages, namely it is the surface that is closest to the origin of pollution (in the case of diesel oil vehicles, the greatest generators of NOx, the outlet of the exhaust pipe is inclined towards the pavement) and since roads occupy very large surfaces, moderate pollution abatement capacities can have a very large impact due to the multiplier effect on the surface.

One of the first references to the use of inorganic compounds (particularly metal oxides, such as titanium) to abate nitrogen oxides by applying said compounds on road pavements is the Mitsubishi EP0919667 patent, wherein cement-based paint is applied to a pavement. Similar patents are EP1020564 and EP1752429.

The main disadvantage of this technology is that the base layer of the road pavement has to be constructed in a specific manner in order to apply the paint so that it adheres well to the road surface. Moreover, the application requires road closure for considerable periods of time and the resulting surface does not permit much skid resistance (with the significant disadvantage that this might cause in terms of road safety) nor does it have sound-absorbing properties, especially appreciated at the present time.

Other subsequent procedures, such as those described in patent WO2005/083013, give details of specific formulations to cover substrates and provide them with self-cleaning and pollution abatement properties. Said patent aims to cover the substrate adequately in order to maximise the surface exposure to the air and acquire long-lasting treatment.

EP 2014726 A1 describes a photocatalytic composition for the abatement of atmospheric pollutants applicable to bituminous surfaces comprising at least one photocatalyst dispersed in an organic dispersing phase. The photocatalytic composition according to that invention comprises one or more photocatalyst compounds in a quantity ranging preferably from 8 to 10% by weight, with respect to the total weight of the composition and an organic dispersing phase in a concentration ranging preferably from 88 to 92% by weight, with respect to the total weight of the composition. The organic dispersing phase comprises one or more polymeric and/or oligopolymeric organic resins in a quantity ranging preferably from 60 to 80% by weight, with respect to the total weight of the organic dispersing phase and other components, such as water, diluents, emulsifying agents and/or stabilizers, present with a total concentration equal to the complement to 100, with respect to the total weight of the organic dispersing phase

This document focuses its attention on the formulation of the composition applied, without paying attention to the characteristics of the paving to be treated. There are no considerations relating to the effectiveness of the treatment according to the surface characteristics of the pavement. The photocatalytic particles (many of which have nano-microscopic characteristics) are introduced into a matrix of an organic resin. The end result is that of the theoretical surface occupied by the photocatalytic particles, only a small part is exposed to the contact with radiation and pollutant gases. From an economic and environmental viewpoint, the treatment described in EP 2014726 A1 requires the use of a large quantity of materials (not only the quantity of the photocatalyst which is very high, but also the resin / photocatalyst weight ratio) to fill the surface air voids of the paving while the photocatalytic activity is only focussed on the surface layer.

The treatment described greatly limits the manner in which the photocatalytic composition acts when applied which, when dry, offers as a surface exposed to pollutants a minimum part of the actual surface of the photocatalyst.

The way EP 2014726 A1 resolves the problem caused by the abrasive action is to apply a thick layer of material containing a photocatalyst so that even though photocatalytic particles might be eliminated, new particles of said photocatalyst appear on the surface. The disadvantage of this process is that a very large quantity of photocatalyst is used while the product that is actually active is only that which is exposed to the air.

When the photocatalytic materials are used on vertical surfaces, such as, for example, walls and façades, abrasion is not a relevant element. On horizontal surfaces, however, it becomes a highly important issue, since said abrasion would eliminate the photocatalytic particles and the pollution abatement capacity would be lost. In the case of asphalt road paving, the abrasion process is very relevant, wherefore an essential element is to minimise its adverse effect.

The result is that when this photocatalytic treatment of pavements is exposed to abrasive action, such treatment loses its efficiency shortly after its application.

### BRIEF DESCRIPTION OF THE DRAWINGS

For a more complete understanding of the present invention, reference is made to the following description taken in conjunction with the accompanying drawings wherein:
- Figure 1 illustrates two models of positive and negative macrotexture
- Figure 2 illustrates a diagram representing the preferable layout of the photocatalytic composition in the asphalt paving.
- Figure 3 illustrates a diagram of the test equipment used to verify the NOx abatement capacity.

### DESCRIPTION OF THE INVENTION

As stated, when a photocatalytic treatment of pavements is exposed to abrasive action, such treatment loses its efficiency shortly after its application.

An object of the present invention is optimising the photocatalytic activity of a given compound, wherein the optimal balance is achieved by maximising the surface exposed and reducing the possibility of abrasion or mechanical action on the photocatalyst causing its removal from the surface.

The solution described in this invention provides said point of balance: on one hand, the asphalt paving has a texture that enables photocatalytic particles to be placed within. On the other, to make the photocatalyst adhere to the surface of air voids, the treatment described provides a certain adhesive quality that prevents the action of water or wind from removing the photocalytic particles. Furthermore, since it is an aqueous suspension, it facilitates the uniform application of the photocatalyst on the surface, a particularly important point due to the tendency of the photocatalytic particles to agglomerate.

Of the different types of road paving existing, asphalt paving is the most generally used due to the better characteristics of comfort and safety it offers to drivers and pedestrians.

An asphalt road surface is, essentially, a mixture of selected aggregates, namely stone, sand and gravel (around 95%), plus a binder that sticks them together, namely bitumen. Depending on the gradation of the aggregates and the percentages of bitumen (plus the addition of fibres, mineral filler, and so forth) the surface characteristics of the asphalt paving can be controlled.

The mixture of aggregates and bitumen generate a material in which there is a content of air voids varying usually between 4% and 25%. Specific properties are provided to asphalt mixtures by seeking the appropriate percentage of air voids. Hence, a low content of air voids provides water-tightness and better mechanical resistance while a higher content facilitates drainage and sound absorption.

The design of the asphalt mixtures is dependent on their position in the pavement layer. Therefore, the mixtures that are in the base or intermediate layers provide structural capacities, primarily rigidity and fatigue resistance. In the case of the coating films, which are the layers that are in contact with the vehicle tyres, their main function is to provide safety, such as reduced braking distance, prevention of water splashing that hinders vision while driving and the prevention of hydroplaning. So if driving is always done in dry road conditions, the ideal surface would be one in which the contact surface with the tyre were maximised. In practice, when it rains the water acts as a lubricant that is interposed between the tyre and the asphalt, reducing friction and, therefore, increasing the braking distance. For this reason, the greater the likelihood of rain, the more the road pavements are designed so that the coating films have air voids that remove a large part of the water, thereby improving safe driving conditions.

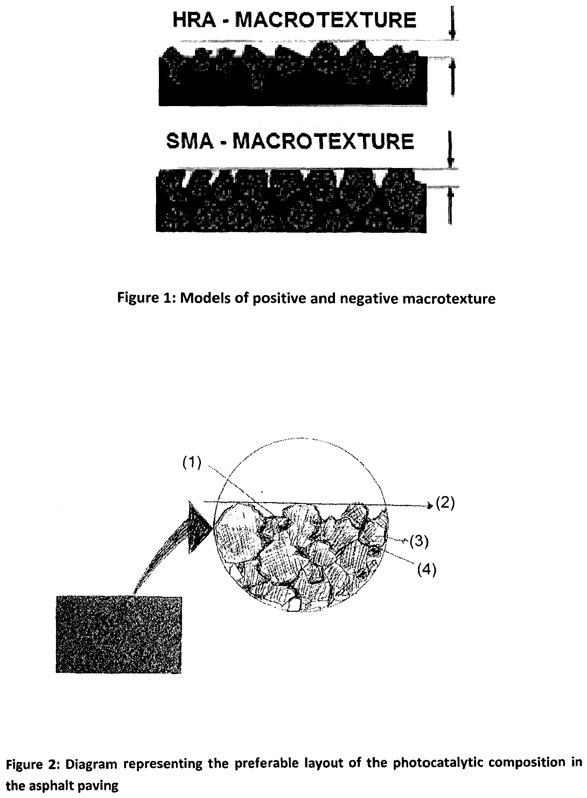

Focussing attention on the bituminous mixtures used as coating film, the content of air voids is reflected in terms of surface texture in the so-called macrotexture. Macrotexture is a measurement of the exterior road surface of a given bituminous mixture. In synthesis, it can be regarded as the sum of the horizontal surface and the surface of the walls of the interstices that are in contact with the exterior. It can be classified into two types, namely positive and negative, depending on how the tyre treads are situated in respect of the aggregates comprising the mixture. To explain this difference visually, Figure 1 shows a drawing of road paving with negative macrotexture (the SMA Stone Mastic Asphalt) and one with positive macrotexture (the HRA Hot Rolled Asphalt).

There are standardised tests to quantify macrotexture, such as UNE EN 13036-1, by virtue of which asphalt paving surfaces can be classified. Generally speaking, macrotexture is related to the capacity of the paving to drain water from the surface, which has a great bearing on vehicle tyre skid resistance in conditions of wet paving.

The surface of the air voids that generate macrotexture are zones that are not reached by the abrasive action of vehicle tyres. In this respect, most of the asphalt surfaces of road paving have sufficient levels of macrotexture to be capable of holding therein small-size mineral particles, such as in the case of the photocatalysts described in this invention.

Asphalt mixtures are usually classified according to three criteria, or combination of criteria: the maximum size of the aggregates, the content of air voids and the granular structure of the aggregates. Accordingly, we speak of dense and semi-dense mixtures (with a low content of air voids), gap graded mixtures (generally speaking having an intermediate content of air voids although they can also be designed with a low content of air voids) and porous mixtures (with a high content of air voids). There are international standards that regulate the nomenclature and characteristics of asphalt mixtures.

To identify these asphalt mixtures, we refer primarily to the EN standards, which are the most well-known on an international level. In this respect, the EN 13108-1 standard regulates the mixtures called Asphalt Concrete and that are recognised by the abbreviation AC followed by numbers that indicate the maximum size, in mm, of the aggregates used in the manufacture thereof.

The gap graded mixtures of a small nominal size of aggregate, called BBTM (type A or B) in the EN 13108-2 standard, are one of the most widely used in coating films due to their excellent safety features. Other types of standardised mixtures include the porous asphalt mixtures regulated by the EN 13108-8 standard and the SMA (Stone Mastic Asphalt) mixtures regulated by the EN 13108-5 standard, and so forth.

Considering macrotexture, as a measure of the surface exposed to the air, for the different types of asphalt mixtures, a minimum level of macrotexture according to their typologies is required by the laws of most European countries. For example, in the case of AC mixtures, the minimum macrotexture required by the Spanish Regulations is 0.7 mm while 1.1 mm is required for type A BBTM mixtures and 1.5 mm for type B BBTM and the gap graded mixtures.

Starting from a value of 1 mm of macrotexture, quite admissible for a mixture to be used in an urban environment, we can estimate that the average quantity of liquid that it can hold, without the liquid flowing along the surface, and as long as this surface is completely flat, would be around 500 ml per m2 of surface. This value is important to understand the levels of supply applied of the photocatalytic treatment.

A macrotexture of 1 mm means that the volume of air voids available under the aggregate crests is at least 1000 cm3/m2. The real volume is greater because the volume is estimated with sand of a standardised size or with glass spheres, wherefore the estimated volume does not include the air voids that are left between the sand particles.

Since the volume is estimated up to the aggregate crests, the average height of the aggregates comprising the visible surface of the pavement could be estimated to be half of said value. Therefore, if we pour liquid up to the maximum height (crests) it will begin to flow through the troughs that are generated in the aggregates of a lower height. Therefore, a reasonable estimate of the volume that could be potentially occupied would be half of the volume estimated by the macrotexture determination method.

Figure 2 shows a diagram representing the preferable layout of the photocatalytic composition in the asphalt paving according to the present invention. The black line (1) shows the surface covered by the photocatalytic composition not reached by the abrasive action of vehicle tyres. The contact surface of the vehicle tyres is shown under (2). Number (3) represents the aggregates of the mixture and (4) the bitumen.

In the State of the art mentioned above, when a matrix with a cement base is used to disperse the photocatalyst, the latter is distributed throughout the mix of the treatment applied, consequent on which, the photocatalytic particles, removed by the abrasion of tyres, are immediately "replaced" by particles that are left exposed to the surface.

It is essential to remember that the photocatalytic procedures under discussion require physical contact between the photocatalyst and the pollutant (nitrogen oxide gases or volatile organic compounds) and solar radiation (visible and/or ultraviolet).

This resistance to abrasion that is characteristic of cement-based treatments has, inter alia, the following disadvantages: the surface paving loses a large part of its macrotexture, consequent on which both road safety and its sound absorption properties are adversely affected.

As detailed below, two types of tests were done to verify the pollution abatement capacity according to the type of road pavement and the formulation of the photocatalytic composition to be applied on the asphalt.

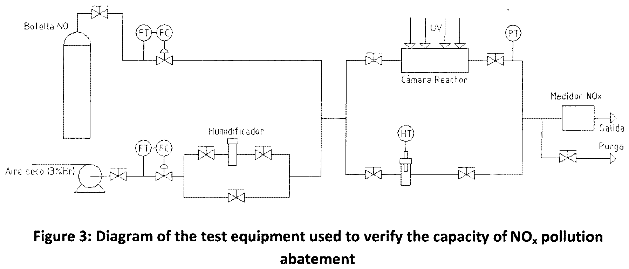

To verify the pollution abatement properties of the materials or systems employed, test equipment based on the standard ISO 22197-1:2007 *"Fine ceramics (advanced ceramics, advanced technical ceramics)* - *Test method for air-purification performance of semiconducting photocatalytic materials* -- *Part 1: Removal of nitric oxide"* was used. Figure 3 shows a diagram of the installation.

### a) Influence of the type of road pavement on pollution abatement capacity

In several initial tests it was verified that it was possible to simply spray aqueous suspensions of photocatalyst (TiO2) on a road pavement. When subjected to abrasion tests, however, the test specimens treated in this manner showed visual signs of loss of photocatalytic particles (the white colour of the TiO2 easily verifies this effect).

Abrasion caused by the vehicle tyres eliminates the photocatalytic particles and the pollution abatement capacity is lost. In the case of asphalt road paving, the abrasion process is very relevant, wherefore an essential element is to minimise its adverse effect.

Table 1 below shows the results of a selection of tests that demonstrates the importance of the surface used to hold photocatalyst. Several samples of asphalt road pavements were tested. As models of reference, we used a dense mixture (AC16-D), a semi-dense mixture (AC16-S) and a discontinuous mixture BBTM-8B, materials widely used for roads. As indicated earlier, the main difference between these mixtures in terms of surface is the macrotexture.

The BBTM-8B mixture has the most macrotexture, that is, it has a larger surface in which to hold the photocatalyst because it has a substantially higher content of air voids.

**Table 1: The results obtained on testing the different specimens after spraying with the product the subject matter hereof.**

| **Mixture** | **Macrotexture (mm)** | **Removal of NOx (%)** |
|---|---|---|
| **BBTM-8B** | **1,5** | **14.3%** |
| **AC16-D** | **0,65** | **10.7%** |
| **AC16-S** | **0,70** | **10.1%** |

It is obvious that the BBTM-8B mixture is much more efficient from the point of view of pollution abatement than the AC16 type mixtures. No relevant differences were found between the D and S mixtures. This can be explained by the fact that their levels of macrotexture are very similar.

Another important aspect relating to the typology of the asphalt mixture in the photocatalyst is the abrasive action of traffic. It seems natural to think that the action of the tyres would remove all the photocatalytic particles that are in the area of action while the particles not affected by this abrasive action could continue to exercise the pollution abatement action.

To verify this theory, the first set of tests done was an experiment with test specimens placed in the truck lane area of an asphalt plant, where the debris level of the tyres is very high and consequently, the action abrasive.

The results of the pollution abatement capacity from the tests specimens demonstrated that, in spite of the extreme conditions of the tests, said test specimens still had around 8% of activity (specimens tested with AC16-D mixture).

Larger scale tests were done on a pavement of an industrial estate. The mixture used in these applications was BBTM-8B. The levels of NO_{X} abatement found after 4 months of application were 13.7% (very similar to the initial values), indicating that both the application system and the formulation used function satisfactorily. It should be pointed out that the test area had a medium level of traffic, mostly cars and motorbikes.

The present invention thus provides an optimum combination of a photocatalytic solution and type of pavement to guarantee the durability of the treatment by reducing the abrasive effect of tyres. Asphalt road surfaces are usually designed in such a way as to maintain certain levels of macrotexture, therefore for the purpose of the present invention an optimal macrotexture can be determined that holds the photocatalytic material in the air voids not subjected to the action of tyres .

From a physical viewpoint, the treatment proposed hereunder would fall under the category of "coating", in this case of the road pavement surface. Therefore it does not matter whether the macrotexture is positive or negative since the end result is that the cavities provided by the macrotexture are covered by a film of resin and photocatalyser once the water has evaporated.

From a practical viewpoint, however, application on negative macrotextures is more useful. The first reason is that in urban road pavements, bituminous mixtures of negative macrotexture have greater resistance to tangential force. Secondly, positive textures generate more rolling noise so they are not very recommendable in urban environments. Thirdly, when considering the dosages of treatment, there is a big difference between applying a coating on positive texture and on negative texture, as we shall now examine.

Considering therefore, by way of illustration, a negative macrotexture, the dosage of the coating on the asphalt surface is a function of the macrotexture.

From a theoretical viewpoint, a macrotexture of 1mm would allow 1000 ml of photocatalytic dispersion to be placed on the pavement. In practice, this is not so because the test method for determining the macrotexture uses sand as an element to measure the spaces between the "peaks and valleys" of the asphalt surface.

As the average profile of peaks and valleys allows the existence of "drains", if 1000 ml of dispersion is applied, this dispersion would drain off. Moreover, this effect becomes accentuated because road surfaces are constructed with a certain slope in order to favour the drainage of water.

Practical experience has demonstrated that a dosage of dispersion of between 200-500 ml/m2 is sufficient for the purposes of this invention. Values close to 250 ml/m2 are considered to be preferable. It has also been demonstrated on an experimental level that the successive application of several treatments substantially improves the performance of pollution abatement. In this regard for example, in the interest of achieving a better homogenization of the product and increasing the drying velocity, two applications of approximately 250 ml/m2 can be applied. The second treatment can be applied when the first application is dry. It has been verified that in the summer, with fine weather, the second layer can be applied after just 15 minutes. Although dosages of over 250 ml/m2 would generate drainage and lead to small increases in elimination performance, the cost and the time required for the application would also increase.

Another important consideration is the influence that the macrotexture has on the durability of the photocatalytic treatment. The more the macrotexture, the greater the quantity of "coating" remains unaffected by the abrasive action of tyres.

The latest tendencies in urban road pavement are directed at the use of mixtures of small nominal aggregate size and a relatively high content of air voids (and therefore of macrotexture) since they optimise the generation/absorption of noise and they are very efficient for generating friction in vehicle braking. These kinds of pavements are especially indicated for this type of photocatalytic treatment because they minimise the abrasive action of tyres on the photocatalytic particles. Therefore, what is important is that the road surface should have a texture that enables photocatalytic composition to be placed within, the macrotexture being positive or negative. Values of the macrotexture between 0.5 mm and 2.5 mm, preferably between 1.0 mm and 1.7 mm, are considered to be the most suitable, and they would correspond to mixtures with small aggregate size but with a sufficient ratio of air voids.

We can therefore conclude that the method, the subject matter of this invention, envisages the application of the photocatalytic composition in an amount and in a manner that is suitable so that upon drying, a layer comprising the photocatalyst and the resin is formed on and/or in the road surface, wherein the layer is adhering to and at least partially covering the surface, but not substantially completely filling the air voids of the surface. The photocatalytic composition is applied to the bituminous surface in one single application or in several successive applications.

### b) Influence of the formulation of the photocatalytic composition on pollution abatement capacity

The subject matter of this invention is not limited to the use of any type of photocatalyst in particular. Numerous types of photocatalysts are acknowledged in the current state of the art (such as TiO₂, ZrO₂, Ta₂O₅, Cu₂O and BiO), all of which are valid for the purpose of this invention. The aim of the present invention was to check what the main properties that control the effectiveness of the different types of photocatalysts are for the particular type of application we wish to develop, namely for asphalt road pavements.

Another purpose of this invention is to find the most suitable composition that guarantees the photocatalytic particles to stick permanently to the asphalt mixture surface.

The photocatalytic particles can be adhered to the asphalt road by adding to the aqueous dispersion small quantities of conventional organic resins in the form of emulsion or suspension (acrylics, vinyl, SBS, polysiloxanes, and so forth).

In the experiments conducted, a photocatalytic composition for the abatement of atmospheric pollutants applicable to bituminous surfaces was prepared by a method comprising the following operational phases:
a) preparation of an aqueous dispersion of an organic resin selected from the group consisting of acrylic, styrene-acrylic, methacrylic, polysiloxane, vinyl, EVA, styrene-butadiene-styrene resins and any combination thereof, preferably the organic resin is an acrylic, styrene-acrylic or vinyl resin
b) dispersing in the aqueous dispersion obtained in the previous phase at least one photocatalyst selected from the group consisting of TiO2, doped TiO2 such as InNbO4-doped TiO2, ZrO2, Ta2O5, Cu2O, BiO and any combination thereof.
c) mixing until a homogeneous mixture is obtained

One of the main technical problems with the preparation of these mixtures lies in the dispersion of the photocatalyser in the liquid phase. Since the density of the photocatalyser (in powder or granulated) is greater than that of the liquid phase, the photocatalyser tends to settle. This is why in solutions such as those proposed in document EP 2014726 A1, the mixtures have to be manufactured on site. The greater the quantity of photocatalyser, the more this problem is aggravated.

We have been able to establish from the tests conducted within the framework of this invention that the use of photocatalysers in suspension as raw material instead of a powder or granulated product very substantially reduces the problem of the sedimentation of the end product.

The possibilities indicated below of using the photocatalyser have been considered in this invention:
Usage: Powder
   Size of particle between 5 and 30 nm.
Usage: Acid suspension
   Size of particle between 5 and 30 nm.
   pH modifying additive: nitric acid.
Usage: Neutral suspension.
   Size of particle between 5 and 30 nm.
   Stabilizing additives: organic phosphates and acetates.

Experiments were conducted with different combinations of percentages of resins and photocatalyst. The main conclusions obtained were as follows:
- The amount of adhesive resin has to be kept as low as possible since if its amount is increased, even though the adherence will be increased, it will also cover the photocatalytic particles, thereby eliminating the photocatalytic capacity by not permitting its contact with pollutant gases. The use of large quantities of resin is therefore negative.
- High pollution abatement results can be obtained from the use of photocatalysts in suspension (acid and neutral) even with concentrations of photocatalyst of under 1%.
- On using powder photocatalysts that are subsequently dispersed in a mixture of water and resin with very low contents of photocatalyst (below 0.3%), the results are very inadequate. When the content of photocatalyst is substantially increased (up to 5%), the results are good. However when the content of photocatalyst increases above 1.6% these dispersions become very unstable when kept stored, wherefore they require constant movement or to be manufactured on site.
In this respect, in order to characterise the stability of the formulations, different sedimentability tests have been conducted. The tests were conducted using graduated sendimentation test tubes and analysing the volume of settled product after a stand period of 1 hour. The table below shows the average values of the results obtained from the tests.
Formulations with a sedimented volume of over 4 ml are difficult to handle and their homogenization is problematic after short periods of storage. This means that those applying the product require specialised and costly equipment in order to re-disperse the formulations prior to their application. Formulations with values of under 4 ml enable sufficient homogenization using conventional means of application without having to use specialised equipment.

| **Catalyser** | **pH** | **TiO2 (%)** | **Resin (%)** | **Sedimented volume(ml)** |
|---|---|---|---|---|
| Powder | Neutral | 0.8 | 1.0% | 3 |
| Powder | Neutral | 1.6 | 2.5% | 4 |
| Powder | Neutral | 3.2 | 5.0% | 6 |
| Suspension | Neutral | 0.8 | 1.0% | 1 |
| Suspension | Neutral | 1.6 | 2.5% | 2 |
| Suspension | Neutral | 3.2 | 5.0% | 3 |
| Suspension | Acid | 0.8 | 1.0% | 2 |
| Suspension | Acid | 1.6 | 2.5% | 3 |
| Suspension | Acid | 3.2 | 5.0% | 5 |

As can be seen in the table above, an increase in the concentration of resin and catalyser causes the dispersion to become more unstable, making it difficult to handle. This leads us to conclude that concentrations greater than 2 % of TiO2 and/or 5% of resin make the suspension more unstable, requiring more specialised equipment for its application without presenting better photocatalytic performance.
- When the resin/photocatalyst ratio is increased, a "masking" effect is produced when the resin captures part of the active centres of the photocatalyst.
- Stability when kept stored by the use of a photocatalyst is in acid or neutral suspensions

The reason for the suspensions having a neutral pH is because no compound that substantially modifies the pH of the water (medium in which the different components are dispersed) was added. When they are dispersed in water both the resin and the catalyser practically maintain neutrality in the suspension. When a powder catalyser is used, the dispersion of TiO2 in distilled water has a pH of between 6 and 7 depending on the concentration. The resin has a pH in distilled water of between 7 and 8. The resulting suspension with both components has a pH of between 6 and 8 depending on the concentration of both components and the water used. If a powder catalyser is used, the catalyser cannot disperse perfectly, causing the formulation to become unstable on storing. The application of this formulation requires re-suspension and vigorous agitation during its application to ensure homogeneity.
The suspension of catalyser at neutral pH has a pH of 8.5 which, on adding the resin, slightly diminishes, leaving the resulting suspension with a pH of between 7 and 8 depending on the quantities of both components. This formulation is perfectly stable on storing and gentle shaking is sufficient prior to its use to ensure homogeneity in the application.
The acid suspension of catalyser contains nitric acid to lower the pH of same until obtaining a pH of approximately 1. This gives the complete formulation with the resin a pH of between 1 and 3. This pH makes the resin unstable on storing and for its application, re-suspension and vigorous agitation during its application is required to ensure homogeneity.

Thus we obtained experimental results such as the following:

| **TiO₂ (%w)** | **Resin (%w)** | **NOx Removal (%)** |
|---|---|---|
| **0.8%** | **1.0%** | **14.3** |
| **1.6%** | **2.5%** | **10.2** |
| **3.2%** | **5.0%** | **8.2** |

Therefore, a balance between the amount of resin and the need for adherence is absolutely essential. One of the formulations most widely used, and on which the foregoing examples are based, is the use of a formulation that contains 0.8% in weight of TiO₂ photocatalyst, 1.0% in weight of styrene-acrylic resin and 98.2% of water.

Nitrogen oxide removal rates of over 14% can be achieved by virtue of the system of the asphalt road pavement / photocatalytic formulation disclosed following an adapted procedure of standard ISO 22197-1:2007. After three months of applying the system the activity of the pavement remains very near 14%.

High levels of pollution abatement capacity by the use of much reduced percentages of photocatalyst and resin.

The photocatalytic composition, object of the present invention is in the form of an aqueous dispersion and comprises a photocatalyst an organic resin, water and optionally further additives.

The photocatalytic is selected from the group consisting of TiO2, doped TiO2 such as InNbO4-doped TiO2, ZrO2, Ta2O5, Cu2O, BiO and any combination thereof, preferably the photocatalyst is TiO2, even more preferably it is TiO2 in the form of anatase.

The organic dispersing phase in which the photocatalyst is dispersed comprises a polymeric and/or oligopolymeric organic resin selected from the group consisting of acrylic, styrene-acrylic, methacrylic, polysiloxane, vinyl, EVA, styrene-butadiene-styrene resins and any combination thereof, preferably the organic resin is an acrylic, styrene-acrylic or vinyl resin.

The photocatalyst is present in the photocatalytic composition in a concentration in a range of from a lower limit of 0.3%, more specifically 0.5%, even more specifically 0.8% by weight to an upper limit of less than 5%, preferably less than 1.5%, more preferably less than 1% by weight, relative to the weight of the photocatalytic composition.

The organic resin is present in the photocatalytic composition in a concentration in a range of from a lower limit of 0.5%, more specifically 1% by weight to an upper limit of less than 10% by weight, preferably less than 7.5% by weight, more preferably less than 5% by weight, relative to the weight of the photocatalytic composition

In synthesis, the invention comprises a photocatalytic treatment especially designed to be applied on asphalt roads.

The photocatalytic dispersion has to be formulated in such a way as to prevent the photocatalytic particles from agglomerating, it must be very fluid to sufficiently cover the air voids of the paving and to provide sufficient adherence between the photocatalytic particles and the aggregates and the bituminous mastic comprising the asphalt paving.

Claim 1 discloses the specific formulation of the photocatalytic composition by which the cited objectives are achieved.

The efficacy of the photocatalytic compositions according to the present invention applied to bituminous road surfaces in the abatement of atmospheric pollutants is demonstrated by the results of different experimental tests conducted by the Applicant, demonstrated above.

### Use of the photocatalytic dispersion applied to a bituminous surface

The application of the photocatalytic composition to the road surface can be effected by distributing the composition on the road surface.

Various application methods of the photocatalytic composition on bituminous surfaces are known on the State Art, based on different techniques such as: vaporization, spraying, roll application, brush application, rubber doctor blade application, and so forth. All of these techniques could be applied in the present invention, however the technique which has given the best results in terms of distribution homogeneity of the photocatalytic composition has proved to be spraying.

The application of the photocatalytic composition can be effected on both hot and cold bituminous surfaces.

Furthermore the invention may be applied both to new asphalts roads and those already in service which, in the latter case, require a preliminary cleaning by pressure water spraying to remove debris that might make the adherence of the photocatalytic particles to the aggregates and the bituminous mastic difficult.

The quantity of photocatalytic composition supplied depends on the pavement macrotexture. It has been verified that the optimal dosage is around 250 ml/m2 since higher values generate runoff because road pavements are rarely completely flat. In theory, quantities close to 500 ml/m2 would be potentially applicable to pavements with an adequate macrotexture as long as the surface was perfectly flat.

## Claims

1. Photocatalytic composition for the abatement of atmospheric pollutants,
wherein the photocatalytic composition is in the form of an aqueous dispersion and comprises
a photocatalyst present in the photocatalytic composition in a concentration in a range of from a lower limit of 0.3%, more specifically 0.5%, even more specifically 0.8% by weight to an upper limit of less than 5%, preferably less than 1.5%, more preferably less than 1% by weight, relative to the weight of the photocatalytic composition,
an organic resin present in the photocatalytic composition in a concentration in a range of from a lower limit of 0.5%, more specifically 1% by weight to an upper limit of less than 10% by weight, preferably less than 7.5% by weight, more preferably less than 5% by weight, relative to the weight of the photocatalytic composition, water and optionally further additives,
and wherein
the photocatalyst is selected from the group consisting of TiO₂, doped TiO₂ such as InNbO₄-doped TiO₂, ZrO₂, Ta₂Oₛ, Cu₂O, BiO and any combination thereof, preferably the photocatalyst is TiO₂, and
the organic resin is selected from the group consisting of acrylic, styrene-acrylic, methacrylic, polysiloxane, vinyl, EVA, styrene-butadiene-styrene resins and any combination thereof, preferably the organic resin is an acrylic, styrene-acrylic or vinyl resin.

2. Photocatalytic composition according to claim 1, wherein the photocatalyst is TiO₂ in the form of anatase.

3. Photocatalytic composition according to any one of the preceeding claims, wherein the weight ratio of the organic resin and the photocatalyst is less than or equal to 3, preferably less than or equal to 2.5, more preferably less than or equal to 2.

4. Photocatalytic composition according to any one of the preceeding claims, wherein the photocatalytic composition has a water content of more than 80% by weight, preferably more than 90% by weight, more preferably more than 95% by weight, relative to the weight of the photocatalytic composition.

5. Photocatalytic composition according to any one of the preceeding claims, wherein the photocatalytic composition comprises from 0.8% to 1.6% by weight of TiO₂ and from 1.0% to 2.5% by weight of organic resin, relative to the weight of the photocatalytic composition .

6. Photocatalytic composition according to any one of the preceeding claims, wherein the pH of the composition is acidic or neutral.

7. Method for preparing a photocatalytic composition according to any one of the preceeding claims comprising the following steps:
a) preparing an aqueous dispersion of an organic resin,
b) dispersing a photocatalyst in the aqueous dispersion obtained in step a).
c) mixing until a homogeneous mixture is obtained.

8. Use of a photocatalytic composition according to any one of claims 1 to 6 or prepared according to claim 7 for application to bituminous road surfaces for the abatement of atmospheric pollutants.

9. Use according to claim 8, wherein the photocatalytic composition is applied in an amount and in a manner suitable that upon drying, a layer comprising the photocatalyst and the resin is formed on and/or in the road surface, wherein the layer is adhering to and at least partially covering the surface, but not substantially completely filling the air voids of the surface.

10. Use according to any one of claims 8 or 9, wherein less than 500 ml/m², preferably less than 250 ml/m² of the photocatalytic composition are applied to the bituminous surface in one single application or several successive applications.

11. Use according to any one of claims 8 to 10, wherein the photocatalytic composition is applied to the bituminous surface by spraying.

12. Use according to any one of claims 8 to 11, wherein the road surface has a texture that enables photocatalytic composition to be placed within, being the macrotexture positive or negative, with values between 0,5 mm and 2,5 mm preferably between 1,0 mm and 1,7 mm.

## Patentansprüche

1. Photokatalytische Zusammensetzung zur Senkung atmosphärischer Schadstoffe,
wobei die photokatalytische Zusammensetzung in der Form einer wässrigen Dispersion vorliegt und umfasst:
einen Photokatalysator, der in der photokatalytischen Zusammensetzung mit einer Konzentration in dem Bereich von einer Untergrenze von 0,3 Gew.-%, insbesondere 0,5 Gew.-%, besonders 0,8 Gew.-%, bis zu einer Obergrenze von weniger als 5 Gew.-%, vorzugsweise weniger als 1,5 Gew.-%, bevorzugter weniger als 1 Gew.-%, bezogen auf das Gewicht der photokatalytischen Zusammensetzung, enthalten ist,
ein organisches Harz, das in der photokatalytischen Zusammensetzung mit einer Konzentration in dem Bereich von einer Untergrenze von 0,5 Gew.-%, insbesondere 1 Gew.-%, bis zu einer Obergrenze von weniger als 10 Gew.-%, vorzugsweise weniger als 7,5 Gew.-%, bevorzugter weniger als 5 Gew.-%, bezogen auf das Gewicht der photokatalytischen Zusammensetzung, enthalten ist, Wasser und gegebenenfalls weitere Zusatzstoffe,
und wobei
der Photokatalysator ausgewählt ist aus der Gruppe bestehend aus TiO₂, dotiertem TiO₂, wie z. B. InNbO₄-dotiertem TiO₂, ZrO₂, Ta₂O₅, Cu₂O, BiO und beliebigen Kombinationen davon, wobei der Photokatalysator vorzugsweise TiO₂ ist, und
das organische Harz ausgewählt ist aus der Gruppe bestehend aus Acryl-, Styrol-Acryl-, Methacryl-, Polysiloxan-, Vinyl-, EVA-, Styrol-Butadien-Styrol-Harzen und beliebigen Kombinationen davon, wobei das organische Harz vorzugsweise ein Acryl-, Styrol-Acryl- oder Vinylharz ist.

2. Photokatalytische Zusammensetzung gemäß Anspruch 1, wobei der Photokatalysator TiO₂ in der Form von Anatas ist.

3. Photokatalytische Zusammensetzung gemäß einem der vorstehenden Ansprüche, wobei das Gewichtsverhältnis des organischen Harzes und des Photokatalysators kleiner oder gleich 3 ist, vorzugsweise kleiner oder gleich 2,5, bevorzugter kleiner oder gleich 2.

4. Photokatalytische Zusammensetzung gemäß einem der vorstehenden Ansprüche, wobei die photokatalytische Zusammensetzung einen Wassergehalt von mehr als 80 Gew.-% aufweist, vorzugsweise mehr als 90 Gew.-%, bevorzugter mehr als 95 Gew.-%, bezogen auf das Gewicht der photokatalytischen Zusammensetzung.

5. Photokatalytische Zusammensetzung gemäß einem der vorstehenden Ansprüche, wobei die photokatalytische Zusammensetzung von 0,8 Gew.-% bis 1,6 Gew.-% TiO₂ und von 1,0 Gew.-% bis 2,5 Gew.-% an organischem Harz, bezogen auf das Gewicht der photokatalytischen Zusammensetzung, umfasst.

6. Photokatalytische Zusammensetzung gemäß einem der vorstehenden Ansprüche, wobei der pH-Wert der Zusammensetzung sauer oder neutral ist.

7. Verfahren zum Herstellen einer photokatalytischen Zusammensetzung gemäß einem der vorstehenden Ansprüche, umfassend die folgenden Schritte:
a) Herstellen einer wässrigen Dispersion eines organischen Harzes,
b) Dispergieren eines Photokatalysators in der bei Schritt a) erhaltenen wässrigen Dispersion,
c) Mischen, bis ein homogenes Gemisch erhalten ist.

8. Verwendung einer photokatalytischen Zusammensetzung gemäß einem der Ansprüche 1 bis 6 oder hergestellt gemäß Anspruch 7 zum Aufbringen auf bitumenhaltige Straßenoberflächen zur Senkung atmosphärischer Schadstoffe.

9. Verwendung gemäß Anspruch 8, wobei die photokatalytische Zusammensetzung in einer Menge und auf eine Weise aufgebracht wird, die geeignet ist, dass bei Trocknen eine Schicht, die den Photokatalysator und das Harz umfasst, auf und/oder in der Straßenoberfläche gebildet wird, wobei die Schicht an der Oberfläche haftet und sie wenigstens teilweise bedeckt, aber die Lufthohlräume der Oberfläche nicht wesentlich vollständig füllt.

10. Verwendung gemäß einem der Ansprüche 8 oder 9, wobei bei einer einzigen Anwendung oder mehreren aufeinanderfolgenden Anwendungen weniger als 500 ml/m², vorzugsweise weniger als 250 ml/m², der photokatalytischen Zusammensetzung auf die bitumenhaltige Oberfläche aufgebracht werden.

11. Verwendung gemäß einem der Ansprüche 8 bis 10, wobei die photokatalytische Zusammensetzung durch Sprühen auf die bitumenhaltige Oberfläche aufgebracht wird.

12. Verwendung gemäß einem der Ansprüche 8 bis 11, wobei die Straßenoberfläche eine Textur aufweist, die ermöglicht, dass die photokatalytische Zusammensetzung darin angeordnet wird, wobei die Makrotextur positiv oder negativ mit Werten zwischen 0,5 mm und 2,5 mm, vorzugsweise zwischen 1,0 mm und 1,7 mm, ist.

## Revendications

1. Composition photocatalytique pour la réduction de polluants atmosphériques,
la composition catalytique étant sous la forme d'une dispersion aqueuse et comprenant
un photocatalyseur présent dans la composition photocatalytique en une concentration dans une plage allant d'une limite inférieure de 0,3 %, plus précisément 0,5 %, encore plus précisément 0,8 % en poids à une limite supérieure de moins de 5 %, de préférence moins de 1,5 %, plus préférablement moins de 1 % en poids, par rapport au poids de la composition photocatalytique,
une résine organique présente dans la composition photocatalytique en une concentration dans une plage allant d'une limite inférieure de 0,5 %, plus précisément 1 % en poids à une limite supérieure de moins de 10 % en poids, de préférence moins de 7,5 % en poids, plus préférablement moins de 5 % en poids, par rapport au poids de la composition photocatalytique,
de l'eau et éventuellement d'autres additifs,
et dans laquelle
le photocatalyseur est choisi dans le groupe constitué par TiO₂, TiO₂ dopé tel que TiO₂ dopé par InNbO₄, ZrO₂, Ta₂O₅, Cu₂O, BiO et une quelconque association de celles-ci, de préférence le photocatalyseur est TiO₂, et
la résine organique est choisie dans le groupe constitué par les résines acryliques, styrène-acryliques, méthacryliques, de polysiloxane, vinyliques, d'EVA, de styrène-butadiène-styrène et une quelconque association de ceux-ci, de préférence la résine organique est une résine acrylique, styrène-acrylique ou vinylique.

2. Composition photocatalytique selon la revendication 1, dans laquelle le photocatalyseur est TiO₂ sous la forme d'anatase.

3. Composition photocatalytique selon l'une quelconque des revendications précédentes, dans laquelle le rapport pondéral de la résine organique et du photocatalyseur est inférieur ou égal à 3, de préférence inférieur ou égal à 2,5, plus préférablement inférieur ou égal à 2.

4. Composition photocatalytique selon l'une quelconque des revendications précédentes, la composition photocatalytique ayant une teneur en eau de plus de 80 % en poids, de préférence plus de 90 % en poids, plus préférablement plus de 95 % en poids, par rapport au poids de la composition photocatalytique.

5. Composition photocatalytique selon l'une quelconque des revendications précédentes, la composition photocatalytique comprenant de 0,8 % à 1,6 % en poids de TiO₂ et de 1,0 % à 2,5 % en poids de résine organique, par rapport au poids de la composition photocatalytique.

6. Composition photocatalytique selon l'une quelconque des revendications précédentes, le pH de la composition étant acide ou neutre.

7. Procédé pour la préparation d'une composition photocatalytique selon l'une quelconque des revendications précédentes comprenant les étapes suivantes :
a) la préparation d'une dispersion aqueuse d'une résine organique,
b) la dispersion d'un photocatalyseur dans la dispersion aqueuse obtenue dans l'étape a),
c) le mélange jusqu'à ce qu'un mélange homogène soit obtenu.

8. Utilisation d'une composition photocatalytique selon l'une quelconque des revendications 1 à 6 ou préparée selon la revendication 7 pour l'application sur des surfaces de roulement bitumineuses pour la réduction de polluants atmosphériques.

9. Utilisation selon la revendication 8, dans laquelle la composition photocatalytique est appliquée en une quantité et d'une manière appropriées pour que, lors du séchage, une couche comprenant le photocatalyseur et la résine soit formée sur et/ou dans la surface de roulement, la couche adhérant à la surface et recouvrant au moins partiellement celle-ci, mais ne remplissant pratiquement pas complètement les vides de la surface.

10. Utilisation selon l'une quelconque des revendications 8 ou 9, dans laquelle moins de 500 ml/m², de préférence moins de 250 ml/m² de la composition photocatalytique sont appliqués sur la surface bitumineuse en une seule application ou plusieurs applications successives.

11. Utilisation selon l'une quelconque des revendications 8 à 10, dans laquelle la composition photocatalytique est appliquée sur la surface bitumineuse par pulvérisation.

12. Utilisation selon l'une quelconque des revendications 8 à 11, dans laquelle la surface de roulement a une texture qui permet de placer la composition photocatalytique en son sein, qui est la macrotexture positive ou négative, avec des valeurs comprises entre 0,5 mm et 2,5 mm de préférence entre 1,0 mm et 1,7 mm.
